(19) Europäisches Patentamt
European Patent Office
Office européen des brevets

(11) Numéro de publication : **0 013 519**
**B1**

(12)

# FASCICULE DE BREVET EUROPÉEN

(45) Date de publication du fascicule du brevet : **22.06.83**

(51) Int. Cl.$^3$ : **F 16 H 5/28**

(21) Numéro de dépôt : **79401019.9**

(22) Date de dépôt : **14.12.79**

(54) **Dispositif de commande d'une boîte de vitesses automatique de véhicule automobile.**

(30) Priorité : **04.01.79 FR 7900141**

(43) Date de publication de la demande : **23.07.80 Bulletin 80/15**

(45) Mention de la délivrance du brevet : **22.06.83 Bulletin 83/25**

(84) Etats contractants désignés : **AT BE CH DE GB IT LU NL SE**

(56) Documents cités :
**BE A 554 904**
**FR A 1 161 188**
**FR A 1 305 601**
**FR A 1 508 309**
**FR A 1 546 613**

(73) Titulaire : **Car et Bus Le MANS - Constructeur - C.B.M**
**66, avenue Olivier Heuzé B. P. 62**
**F-72002 Le Mans Cedex (FR)**

(72) Inventeur : **Bale, Alain**
**133, avenue Savorgnan de Brazza**
**Le Mans, Sarthe (FR)**

(74) Mandataire : **Tony-Durand, Serge**
**Cabinet Tony-Durand 22, Boulevard Voltaire**
**F-75011 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 013 519 B1**

Jouve, 18, rue St-Denis, 75001 Paris, France

Dispositif de commande d'une boîte de vitesses automatique de véhicule automobile

La présente invention a pour objet un dispositif de commande d'une boîte de vitesses automatique de véhicule automobile, notamment d'autobus ou d'autocar.

Dans une première réalisation connue d'un tel dispositif, celui-ci comprend un système à câble et tringlerie pouvant être manœuvré par un levier placé sur le tableau de bord du véhicule, et qui est relié à un axe de sélection monté sur la boîte de vitesses. Un tel dispositif se révèle à l'usage relativement peu commode à manœuvrer pour le conducteur du véhicule, surtout si ce dernier est un autobus ou un autocar.

Dans une seconde réalisation connue, la commande de la boîte de vitesses automatique est exécutée par un système hydroélectronique. Elle comporte ainsi une centrale électronique reliée d'une part à la boîte, et d'autre part à un clavier sélecteur à plusieurs touches placé sur le tableau de bord, à portée du conducteur.

Ce dispositif est complexe, onéreux et fragile.

On connaît également, par le document FR-A 1 508 309, un dispositif sélecteur de boîte de vitesses, permettant la présélection du changement de vitesse en un moment quelconque, par un mécanisme d'actionnement d'un commutateur et de déclenchement par manœuvre de la pédale de débrayage.

Ce système présente l'inconvénient de nécessiter le débrayage préalable par le conducteur de l'organe moteur, ainsi que la manœuvre, peu commode, d'un levier sélecteur.

L'invention a pour but de réaliser un dispositif de commande moins onéreux et moins complexe, et qui puisse être manœuvré à partir d'un clavier à touches, celui-ci étant en effet d'un usage plus commode pour le conducteur que le levier pivotant habituel.

A cet effet, le dispositif de commande comprend conformément à l'invention : un axe détecteur des positions assignées à l'axe sélecteur, déplaçable en translation au moyen d'un système électropneumatique comportant un clavier à touches de commande placé sur le tableau de bord du véhicule, et une came rotative solidaire de l'axe de sélection et coopérant, d'une part avec l'axe détecteur de positions et d'autre part avec le système électropneumatique de commande précité, de telle sorte qu'à l'enfoncement d'une touche sur le clavier de commande corresponde un ordre du système électropneumatique plaçant l'axe détecteur ainsi que la came associée et l'axe sélecteur dans une position déterminant la gamme de vitesses choisie.

Le clavier à touches présentant une série de touches correspondant aux différentes gammes de vitesses choisies, ainsi qu'une touche « Neutre » et une touche « Marche arrière », le fait d'appuyer sur l'une des touches actionne le système électropneumatique qui amène alors l'axe détecteur dans la position correspondant à la touche enfoncée, le déplacement de cet axe détecteur faisant corrélativement pivoter l'axe de sélection jusqu'à la position voulue, par l'intermédiaire de la came associée solidaire de l'axe sélecteur.

Suivant un mode de réalisation de l'invention, l'axe détecteur est pourvu d'un ensemble de rampes profilées associées à un nombre égal de contacteurs électriques correspondants reliés d'une part aux touches du clavier et d'autre part à un circuit pneumatique de commande de la came rotative de l'axe de sélection, et à chaque position prédéterminée de l'axe détecteur et de ses rampes par rapport à l'ensemble des contacteurs électriques, correspond une position de la came et de l'axe sélecteur.

Suivant un mode de réalisation de l'axe détecteur, les rampes agencées sur celui-ci sont constituées par des surfaces tronconiques coaxiales audit axe et groupées par paires avec des inclinaisons alternées, chaque contacteur associé à une rampe étant en appui élastique sur celle-ci lorsqu'il est fermé, et en appui élastique sur une partie de l'axe extérieur à la rampe lorsqu'il est ouvert.

On réalise ainsi, par l'intermédiaire de l'axe détecteur de positions et du circuit pneumatique associé, un asservissement en position capable de placer la came rotative sur la position correspondant à la gamme de vitesses choisie sur le clavier à touches placé sur le tableau de bord.

D'autres particularités et avantages de l'invention apparaîtront au cours de la description qui va suivre. Aux dessins annexés, donnés à titre d'exemple non limitatif, on a représenté une forme de réalisation du dispositif de commande selon l'invention.

La figure 1 est une vue en élévation avec arrachements montrant l'axe détecteur des positions assignées à l'axe sélecteur, la came rotative associée ainsi qu'un vérin du circuit pneumatique de commande.

La figure 2 est une vue partielle en élévation suivant II-II de la figure 1, montrant un vérin du circuit pneumatique et un dispositif amortisseur de ce vérin.

La figure 3 est une vue schématique représentant le circuit électropneumatique faisant partie du dispositif de commande selon l'invention, ainsi qu'une partie de l'axe détecteur commandé par ce circuit électropneumatique.

La figure 4 est une vue de détail à échelle agrandie, montrant en élévation un contacteur électrique coopérant avec l'axe détecteur.

La figure 5 est un tableau symbolisant les différentes positions possibles de l'ensemble des contacteurs électriques sur les rampes de l'axe détecteur, pour chacune des gammes de vitesses prévues sur le clavier à touches.

La figure 6 illustre schématiquement les diverses positions relatives de l'axe détecteur et d'un contacteur associé.

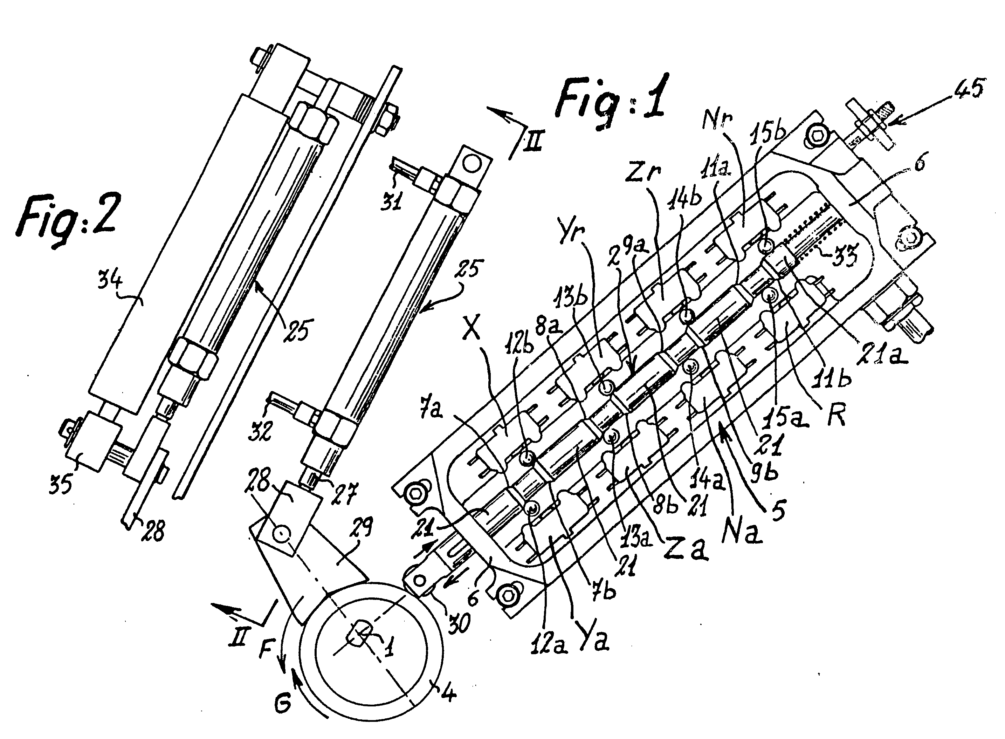

Le dispositif de commande d'une boîte de vitesses automatique de véhicule automobile représenté aux figures 1 à 4, peut être adapté à toutes boîtes de vitesses ayant un axe de sélection rotatif, aussi bien sur des véhicules de transport collectif comme les autobus et les autocars, que sur des véhicules de tourisme.

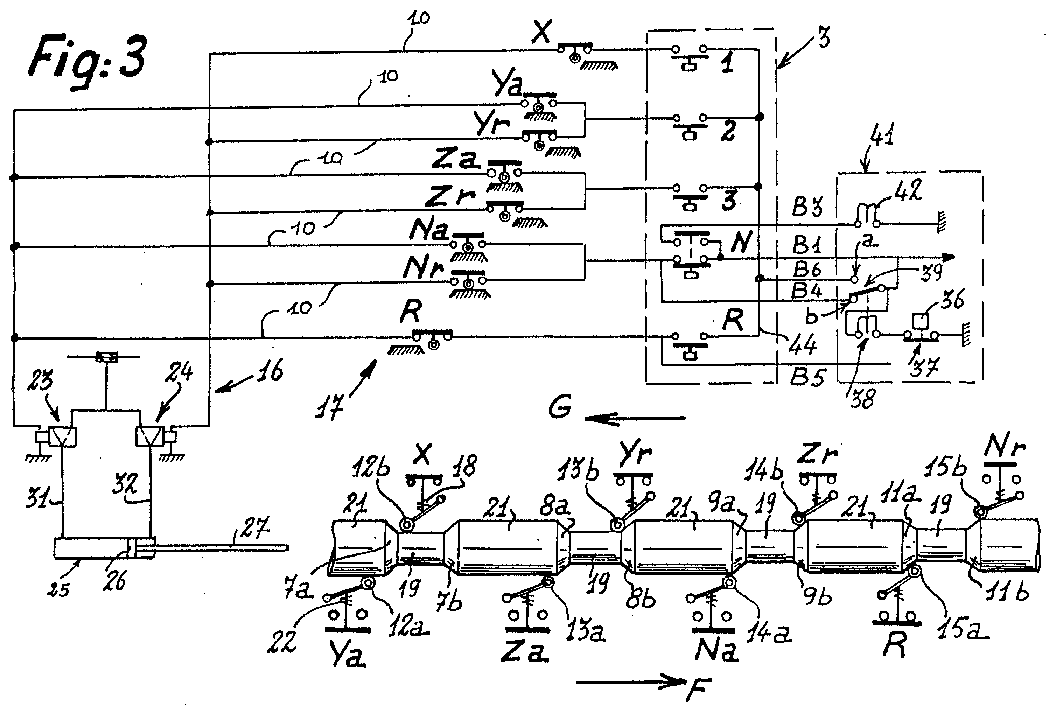

Ce dispositif comprend un axe 1 sélecteur de vitesses, monté rotativement sur une boîte de vitesses non représentée, un axe 2 détecteur des positions angulaires assignées à l'axe sélecteur 1 et déplaçable en translation dans un sens ou dans l'autre, au moyen d'un système électropneumatique représenté schématiquement à la figure 3, et qui comporte un clavier à touches 3 de commande placé sur le tableau de bord du véhicule.

Le dispositif de commande selon l'invention comprend également une came rotative 4 solidaire de l'axe de sélection 1, la came 4 ayant une section circulaire et l'axe sélecteur 1 étant décentré par rapport à la came 4. Cette dernière coopère, d'une part avec l'axe détecteur 2 et d'autre part avec le système électropneumatique précité, de telle sorte qu'à l'enfoncement d'une touche sur le clavier de commande 3, corresponde un ordre du système électropneumatique plaçant l'axe détecteur 2 ainsi que la came 4 associée et l'axe sélecteur 1 dans une position déterminant la gamme de vitesses choisie.

Dans le mode de réalisation représenté, le dispositif est constitué de la manière suivante : l'axe détecteur 2, qui est logé dans un boîtier allongé 5 dont il traverse les extrémités 6, est pourvu d'un ensemble de rampes profilées 7a, 7b, 8a, 8b... 11a, 11b associées à un nombre égal de contacteurs électriques correspondants 12a, 12b, 13a, 13b ... 15a, 15b reliés à un circuit pneumatique désigné par la référence générale 16 sur la figure 3, et qui assure la commande de la came rotative 4 et de l'axe sélecteur 1. Le circuit pneumatique 16 est lui-même en liaison de commande avec le clavier à touches 3, par un ensemble de connexions électriques 17 sur lesquelles sont placés les contacteurs précités. On décrira maintenant d'abord en détail l'axe de détection 2, la came 4 et les contacteurs, après quoi on décrira le système pneumatique commandé à partir du clavier 3 par l'intermédiaire des contacteurs.

Description de l'axe détecteur et des contacteurs électriques associés.

Les rampes 7a, 7b... de l'axe détecteur 2 sont constituées par des surfaces tronconiques coaxiales audit axe, et groupées par paires, avec des inclinaisons alternées, chaque contacteur tel que 12a etc... associé à une rampe étant en appui élastique sur celle-ci lorsqu'il est fermé, et en appui élastique sur un épaulement de l'axe 2 extérieur à la rampe correspondante lorsqu'il est ouvert. Les deux positions possibles pouvant être prises par chaque contacteur ou minirupteur électrique sont visibles aux figures 1 et 3.

Sur la figure 3 notamment, on voit par exemple que le contacteur ou minirupteur X est fermé lorsque son organe mobile 12b, poussé par une pièce élastique de rappel 18, prend appui sur une partie 19 de l'axe 2, comprise entre les deux rampes tronconiques 7a, 7b, et de diamètre inférieur à celui des épaulements de l'axe 2 tels que 21, séparant deux paires consécutives de rampes, par exemple les paires 7a, 7b, 8a et 8b.

En revanche, la pièce mobile 12a du contacteur ou minirupteur Ya est en appui sur un épaulement 21 de l'axe 2, de sorte que cet organe mobile 12a ouvre le contact Ya par l'intermédiaire de l'organe élastique associé 22.

A chaque position en translation de l'axe détecteur 2, correspond donc un ensemble prédéterminé de positions des différents contacteurs associés aux rampes profilées, ces contacteurs pouvant être ouverts ou fermés en fonction de la position de leurs pièces mobiles par rapport aux rampes profilées correspondantes. Dans l'exemple de réalisation représenté, l'axe détecteur 2 est pourvu de quatre paires de rampes profilées telles que 7a, 7b etc ...., qui coopèrent avec huit contacteurs ou minirupteurs X, Yr, Zr, Nr, Ya, Za, Na et R.

L'ensemble de ces contacteurs est relié, par des connexions électriques 10, au circuit électropneumatique 16, de façon à pouvoir lui donner des ordres appropriés en fonction des ordres de commande transmis aux contacteurs par le clavier à touches 3. Ce dernier comporte, dans la réalisation représentée, cinq touches : une touche 1 correspondant au premier et au deuxième rapports de vitesses, c'est-à-dire que lorsque cette touche 1 est enfoncée, le véhicule passe automatiquement en première puis en seconde. Le clavier 3 comporte une seconde touche 2, qui commande le démarrage en première, puis le passage en seconde et en troisième vitesse. La troisième touche 3 commande le passage de la boîte de vitesses successivement en première, seconde, troisième et quatrième rapports de vitesses. La touche N correspond au point mort, tandis que la touche R correspond à la marche arrière.

Ainsi, le fonctionnement du détecteur de positions constitué par l'axe 2 logé dans son boîtier 5, est basé sur l'utilisation de deux minirupteurs ou contacteurs Ya, Yr etc... pour chaque position de l'axe sélecteur 1, sauf les positions extrêmes 1 et R, en mettant à profit leurs courses différentielles par rapport aux rampes profilées agencées sur l'axe détecteur 2.

Description du circuit électropneumatique de commande.

Sur le circuit électrique 17 reliant le clavier de commande 3 au circuit pneumatique 16 (figure 3), on a représenté, pour une meilleure compréhension du fonctionnement du dispositif, chaque paire de contacteurs associés à une touche déterminée du clavier 3. On voit ainsi que la touche 1 commande le contacteur X, que la touche 2 commande les contacteurs Ya et Yr, que la touche 3 commande la paire de contacteurs Za et Zr, que la touche N (Neutre) commande la paire de contacteurs Na et Nr, et que la touche R commande le contacteur R.

Comme on le voit, lorsque la touche N est enfoncée, les contacteurs correspondants Na et Nr sont ouverts. L'un des contacteurs de chaque paire commande l'axe détecteur 2 dans un sens, par l'intermédiaire du circuit pneumatique 16, tandis que le second contacteur de chaque paire commande l'axe 2 dans l'autre sens.

Chacune des touches 2, 3, N du clavier 3 est reliée à la paire de contacteurs associés, ceux-ci étant à leur tour reliés à une paire d'électrovalves 23, 24 qui commandent un vérin pneumatique 25 à double effet.

Le vérin 25 est pourvu d'un piston 26 dont la tige 27 est équipée d'une chape terminale 28 articulée rotativement sur un levier 29 fixé à la came 4.

L'électrovalve 23 est reliée au vérin 25 par une canalisation 31 d'injection d'air dans l'extrémité du vérin 25 la plus éloignée du levier 29, tandis que l'électrovalve 24 est reliée à l'extrémité opposée du vérin par une canalisation 32. Ainsi, lorsque l'électrovalve 23 est excitée à partir d'un ordre émanant du clavier 3, elle envoie l'air dans le vérin 25, dont le piston 26 et la tige 27 font pivoter le levier 29, la came 4 et l'axe de sélection 1 dans le sens antihoraire (flèche F). Lorsque par contre c'est l'électrovalve 24 qui est excitée, l'air injecté dans le vérin 25 par la canalisation 32 repousse le piston 26 et la tige 27 dans le sens horaire (flèche G) en entraînant des déplacements corrélatifs dans un sens et dans l'autre de l'axe détecteur 2.

Les liaisons entre les touches 1, 2, 3 N, R du clavier 3 et les électrovalves 23, 24 sont établies comme suit :

— la touche 1 est reliée au contacteur X, lequel est à son tour relié à l'électrovalve 24. Lorsque la touche 1 n'est pas encore enfoncée, le contacteur X est fermé, son organe mobile 12 b étant appliqué élastiquement entre les rampes 7a et 7b, sur la zone de moindre diamètre 19, comme représenté à la figure 3.

— la touche 2 est reliée aux minirupteurs ou contacteurs Ya et Yr, Ya étant relié à l'électrovalve 23, tandis que Yr est relié à l'électrovalve 24. Lorsque la touche 2 n'est pas enfoncée, Ya est ouvert et Yr est fermé. En effet, le contacteur Ya est alors placé par rapport à l'axe détecteur 2 de telle sorte que sa pièce mobile 12a est en appui sur l'une des zones 21 de diamètre maximum de l'axe 2, et de ce fait ouvre le contacteur Ya par l'intermédiaire de l'organe élastique 22.

— la touche 3 est reliée aux contacteurs Za et Zr, respectivement eux-mêmes reliés aux électrovalves 23 et 24. Lorsque la touche 3 n'est pas enfoncée, Za est ouvert, tandis que Zr est fermé, leur pièce mobile de contact avec l'axe détecteur 2 étant dans les mêmes positions que celles des deux contacteurs associés à la touche 2.

— la touche neutre « N » est reliée aux contacteurs Na et Nr, eux-mêmes respectivement en liaison avec les électrovalves 23 et 24. Ces deux contacteurs sont ouverts lorsque la touche N est enfoncée, comme représenté sur la figure 1.

— la touche R est reliée au contacteur R, lui-même connecté à l'électrovalve 23. Quand la touche R n'est pas enfoncée, le contacteur R est fermé.

L'axe détecteur 2 est pourvu à l'une de ses extrémités, d'un galet rotatif 30 placé en appui sur la périphérie de la came 4. Le galet 30 est maintenu en contact avec cette dernière par un organe élastique 33, agissant sur l'axe 2 en prenant appui sur le fond 6 du boîtier 5. Dans l'exemple décrit, l'organe élastique est constitué par un ressort hélicoïdal 33 monté coaxialement à l'axe 2, entre l'épaulement terminal 21a et le fond 6 du boîtier, c'est-à-dire sur l'extrémité de l'axe 2 opposée au galet 32.

Par ailleurs, le vérin pneumatique 25 est muni d'un dispositif amortisseur 34, d'une façon connue en soi, qui permet de contrôler de façon précise le positionnement de la came 4 en réponse aux sollicitations du vérin 25. L'amortisseur 34 est rempli d'un liquide hydraulique et pourvu d'un piston intérieur dont la tige est reliée à la chape terminale 28 par une pièce 35 (figure 2). Les va-et-vient de la tige 27 et de la chape 28 sont ainsi freinés par la pièce intermédiaire 35 de l'amortisseur, qui maintient également dans la position choisie l'ensemble constitué par la tige 27, le levier 29, la came 4, l'axe sélecteur 1 et l'axe détecteur 2.

On décrira maintenant, en référence à la figure 3, des moyens prévus complémentairement par l'invention, pour remettre automatiquement la boîte de vitesses dans sa position « Neutre » correspondant à l'enfoncement de la touche « N », dans le cas où le chauffeur couperait le moteur en oubliant d'enfoncer la touche « Neutre ».

Dans l'exemple de réalisation représenté à la figure 3, lesdits moyens comprennent un mano-contact hydraulique 36 associé à un contact électrique 37 maintenu ouvert par la pression hydraulique dans le mano-contact 36 quand le moteur tourne, à l'encontre de la sollicitation d'un organe élastique non représenté. Le contact 37 est relié en série avec un relais 38, lui-même relié à un contact basculant 39 pouvant être placé dans deux positions, dont la première position *a* de sécurité, correspond au point mort. Dans la seconde position *b*, le contact 39 établit la liaison électrique entre la batterie et une connexion B4 aboutissant entre la touche « N » et les minirupteurs correspondants Na et Nr.

Le fonctionnement de ce système de sécurité est le suivant : si le chauffeur arrête le moteur en oubliant d'enfoncer la touche « N », la pression hydraulique dans le mano-contact 36 devient insuffisante pour maintenir ouvert le contact 37 qui se ferme. De ce fait, le relais 38 est excité, et place le contact 39 dans sa position b, ce qui fait passer du courant dans la connexion B4, et ouvre les minirupteurs Na et Nr. Ainsi, la boîte de vitesses est automatiquement replacée dans l'état « Neutre », sans que la touche « Neutre » ait été enfoncée.

Le système de sécurité qui vient d'être décrit est placé dans un coffret électrique 41, qui contient également diverses connexions, dont un relais 42 de démarrage relié par une connexion B3 à la touche N, une connexion B1 également reliée à la touche N, une connexion B6 établissant la liaison entre la position a du contacteur 39 et la connexion 44 desservant l'ensemble des touches du clavier 3. Enfin, une connexion B5 partant de la touche R alimente les feux de recul du véhicule.

Il convient encore de noter que les minirupteurs logés dans le boîtier 5 peuvent être réglés en position par rapport à l'axe détecteur 2, au moyen d'un organe de réglage 45 extérieur au boîtier 5.

Le fonctionnement du dispositif de commande qui vient d'être décrit est le suivant.

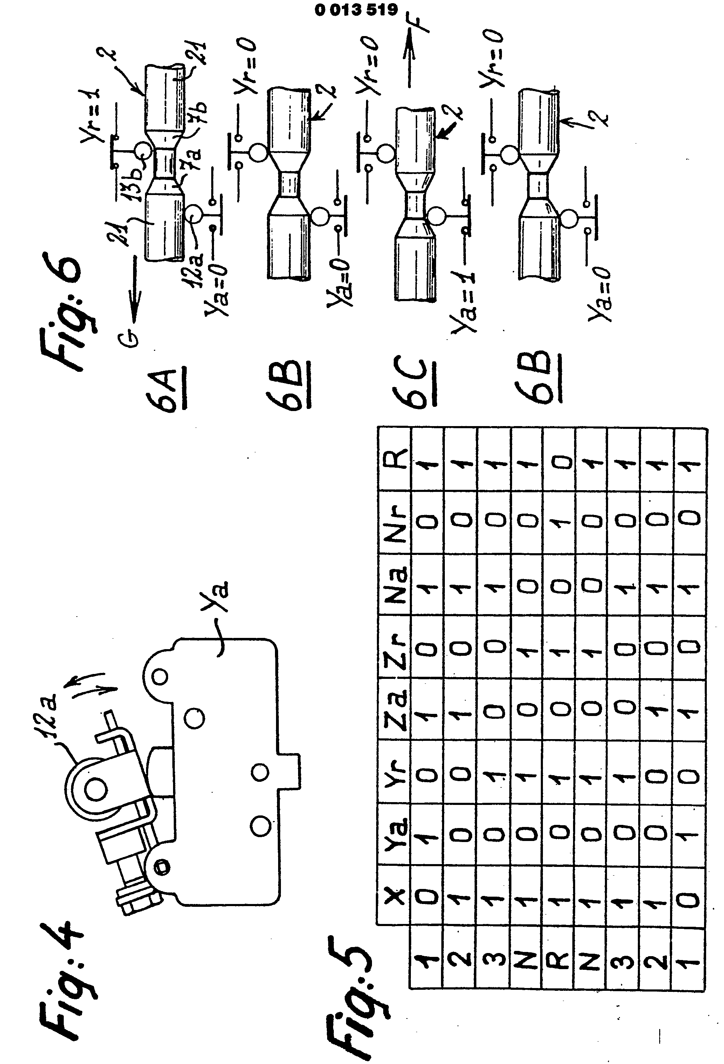

On expliquera tout d'abord le principe du fonctionnement de l'axe détecteur 2 des positions angulaires assignées à l'axe sélecteur 1, en référence au schéma de la figure 6.

Sur ce schéma, on a représenté les différents états possibles 6A, 6B, 6C d'un couple de minirupteurs associés à une paire de rampes profilées 7a et 7b. Pour la commodité de la description, on a supposé que le minirupteur situé à gauche du minirupteur Yr est le minirupteur Ya, alors que sur les figures 1 et 3, ces deux minirupteurs sont séparés par les minirupteurs X et Za.

Dans l'état 6A, le minirupteur Yr est fermé, son organe mobile se trouvant en appui à la base de la rampe 8b, et il est dans l'état 1. En revanche, le minirupteur Ya est ouvert, son organe mobile 12a étant en appui contre un épaulement intercalaire 21 de diamètre plus élevé, et ce minirupteur Ya est dans l'état O.

Si le conducteur demande la position « Y » en appuyant sur la touche appropriée, Yr étant fermé, le système électro-pneumatique 16, 17 commande le retour du vérin 25, qui fait pivoter la came 4 dans le sens de la flèche G. Dès que Yr = O, c'est-à-dire dès que Yr est ouvert, son organe mobile ayant escaladé la rampe correspondante 7b, le vérin 25 est stoppé dans sa course par cessation de l'excitation de l'électrovalve 24 qui n'approvisionne plus en air le vérin, et on se trouve dans la position « Y ». Cette position est représentée schématiquement dans l'état 6B. A ce moment, Yr = O, et Ya = O. En effet, le déplacement de l'axe 2 est insuffisant pour que le minirupteur Ya se ferme.

On voit que cela est effectivement le cas en examinant la figure 1 qui représente la situation réelle.

Si maintenant l'on part de l'état 6C, dans lequel le minirupteur Yr est ouvert et se trouve à l'état O, tandis que le minirupteur Ya est fermé et se trouve à l'état 1, son organe mobile étant en appui à la base de la rampe 7a, et que le conducteur demande la position Y, Ya étant par conséquent fermé, le système fonctionne comme suit. Le vérin 25 avance dans le sens de la flèche F, et dès que Ya = O (situation 6B), le vérin 25 est stoppé dans sa course, tandis que Yr est toujours dans l'état O. Le système est alors dans la position Y.

Ainsi on peut résumer le fonctionnement du couple Ya et Yr par le tableau des phases ci-dessous :

| | $Y_a$ | $Y_r$ |
|---|---|---|
| Etat 1 (6A) | 0 | 1 |
| Position Y (6B) | 0 | 0 |
| Etat 2 (6C) | 1 | 0 |

Finalement, on obtient pour l'ensemble des minirupteurs ou contacteurs X, Ya etc... et les touches correspondantes 1, 2, 3 N, R, le tableau général des phases représenté à la figure 5.

Le fonctionnement général du dispositif de commande suivant l'invention est le suivant. Tout d'abord, le démarrage du moteur ne peut s'effectuer que si la touche N est au préalable enfoncée, sinon le démarrage ne peut pas avoir lieu. Le conducteur ayant donc enfoncé cette touche N, appuie ensuite sur la touche qu'il a choisie parmi les touches 1, 2, 3 et R. Si par exemple le conducteur enfonce la touche 2, le courant électrique passe par le contacteur Yr qui est fermé, ce qui excite l'électrovalve 24. De ce fait, de l'air est envoyé par la canalisation 32 dans le vérin 25, dont le piston 26 et la tige 27 entraînent en rotation le levier 29, la came 4 et l'axe sélecteur 1 dans le sens horaire G, suivant une course retour. L'axe détecteur 2 est corrélativement déplacé en translation dans le sens de la flèche G, jusqu'à ce que Yr soit ouvert (état O). Le contacteur Yr cesse alors d'exciter l'électrovalve, qui n'alimente plus en air le vérin 25, lequel s'immobilise dans la position atteinte, ainsi que corrélativement le levier 29, la came 4, l'axe sélecteur 1 et l'axe détecteur 2.

La boîte de vitesses est alors placée sur le rapport 2.

Le fonctionnement du dispositif est identique pour les autres touches, avec cette seule différence pour les touches extrêmes 1 et R que celles-ci ne commandent chacune qu'un contacteur.

L'axe détecteur 2 est convenablement prérégié au moyen de la vis de réglage 45, afin de déterminer les courses relatives des contacteurs et de leurs rampes profilées associées.

La came 4, pour des raisons de simplicité de fabrication, présente le contour d'un arc de cercle décentré par rapport à l'axe 1 du sélecteur.

Au niveau de la boîte de vitesses, chaque position de l'axe sélecteur 1 est verrouillée de façon relativement ferme, grâce au dispositif 34 amortisseur des déplacements de la tige du vérin pneumatique 25, ce qui assure une bonne efficacité au dispositif de commande selon l'invention.

Par ailleurs, comme on l'a expliqué ci-dessus, le système de sécurité placé dans le coffret électrique 41 exécute une remise automatique de la boîte de vitesses dans l'état N, pour le cas où le conducteur couperait le contact du moteur en oubliant d'enfoncer la touche N.

Le dispositif de commande selon l'invention est d'une utilisation particulièrement commode pour le conducteur d'un autobus ou d'un autocar, grâce au clavier à touches 3.

Ce dispositif de commande est applicable, non seulement à toutes boîtes de vitesses pourvues d'un axe de sélection rotatif comme dans l'exemple représenté, mais aussi à des boîtes de vitesses dont l'axe de sélection est muni d'un tiroir mobile en translation.

Le vérin pneumatique à double effet déplace alors le tiroir en même temps que l'axe de sélection. D'une manière générale, le dispositif de commande selon l'invention peut être monté sur toutes boîtes de vitesses dont la sélection est exécutée par rotation ou translation d'un organe quelconque.

L'invention est également applicable aux boîtes mécaniques de vitesses, notamment celles qui équipent des engins de travaux publics, des grues etc...

Ainsi, la gamme de vitesses peut être différente de celle décrite, qui ne comporte que cinq positions. En effet, ces cinq positions sont particulièrement adaptées aux véhicules urbains, tels qu'autobus, pour lesquels il peut être préféré de ne pas obliger la boîte de vitesses à rester en première. En effet, dans le cas d'un véhicule de tourisme, la gamme de vitesses pourra comprendre de préférence six positions, à savoir une position 1 dans laquelle la transmission reste seulement en première, une position 2 dans laquelle le démarrage se fait en première puis dans laquelle on passe en seconde, une position 3 dans laquelle on démarre en première, puis on passe en seconde et en troisième, une position 4 dans laquelle on démarre en première puis on passe en seconde, troisième et quatrième, une position N de point mort et une position R de marche arrière.

Pour une boîte de vitesses à six positions, le clavier à touches correspondant doit évidemment comporter six touches, avec une paire de contacteurs supplémentaires, le fonctionnement étant par ailleurs identique à celui de la réalisation décrite ci-dessus.

**Revendications**

1. Dispositif de commande d'une boîte de vitesses automatique de véhicule automobile, comprenant des moyens pour faire pivoter un axe (1) d'un sélecteur de vitesses, afin de l'amener à différentes positions correspondant à une gamme de vitesses choisie, caractérisé en ce qu'il comprend : un axe (2) détecteur des positions assignées à l'axe sélecteur (1), déplaçable en translation au moyen d'un système électropneumatique comportant un clavier à touches (3) de commande placé sur le tableau de bord du véhicule, et une came rotative (4) solidaire de l'axe de sélection (1) et coopérant, d'une part avec l'axe détecteur (2) de positions et d'autre part avec le système électropneumatique de commande précité, de telle sorte qu'à l'enfoncement d'une touche sur le clavier de commande (3) corresponde un ordre du système électropneumatique plaçant l'axe détecteur (2) ainsi que la came associée (4) et l'axe sélecteur (1), dans une position déterminant la gamme de vitesses choisie.

2. Dispositif de commande selon la revendication 1, caractérisé en ce que l'axe détecteur (1) est pourvu d'un ensemble de rampes profilées (7a, 7b ... 11b) associées à un nombre égal de contacteurs électriques (X, Yr, Zr, Nr, Ya, Za, Na, R) reliés d'une part aux touches du clavier (3) et d'autre part à un circuit pneumatique (16) de commande de la came rotative (4) et de l'axe de sélection (1), et en ce qu'à chaque position prédéterminée de l'axe détecteur (2) et de ses rampes (7a ... 11b) par rapport à l'ensemble des contacteurs électriques, correspond une position de la came (4) et de l'axe sélecteur (1).

3. Dispositif de commande selon la revendication 2, caractérisé en ce que les rampes (7a ... 11b) de l'axe détecteur (2) sont constituées par des surfaces tronconiques coaxiales audit axe et groupées par paires avec des inclinaisons alternées, chaque contacteur (X ... R) associé à une rampe (7a ... 11b) étant en appui élastique sur celle-ci lorsqu'il est fermé, et en appui élastique sur un épaulement de l'axe (2) extérieur à la rampe lorsqu'il est ouvert.

4. Dispositif de commande selon la revendication 3, caractérisé en ce que, à chaque gamme de vitesses associée à une touche du clavier (3) correspond une position de l'axe détecteur (2) ainsi que deux contacteurs (Ya, Yr ; Za, Zr ; Na, Nr) et deux rampes (7a ... 11b), sauf pour les positions extrêmes associées à la première vitesse et à la marche arrière, l'un des contacteurs (Ya, Za, Na) de chaque paire commandant ledit axe détecteur (2) dans un sens, par l'intermédiaire du circuit pneumatique (16), tandis que le second contacteur (Yr, Zr, Nr) commande l'axe détecteur (2) dans l'autre sens.

5. Dispositif de commande suivant l'une des revendications 2 à 4, caractérisé en ce que le circuit pneumatique (16) comporte des électrovalves (23, 24) reliées d'une part au clavier à touches (3), et d'autre part à un vérin pneumatique à double effet (25) de commande de la came (4) en rotation par l'intermédiaire d'un levier (29) solidaire de ladite came, les électrovalves (23, 24) commandant le piston (26) du vérin (25) dans un sens ou dans l'autre en fonction des ordres transmis par les contacteurs (X, Ya, Yr ... Nr), ces ordres étant eux-mêmes liés aux positions des contacteurs sur les rampes correspondantes (7b, 7a ... 11b).

6. Dispositif de commande suivant l'une des revendications 1 à 5, dans lequel le clavier à touches (3) comporte une série de touches (1, 2, 3, N, R) correspondant aux différentes gammes de vitesses dont une touche N « Neutre », caractérisé en ce qu'il est muni de moyens pour remettre automatiquement la boîte de vitesses dans sa position « Neutre » correspondant à l'enfoncement de la touche « Neutre », si le chauffeur coupe le moteur sans enfoncer la touche « Neutre ».

7. Dispositif de commande suivant la revendication 6, caractérisé en ce que lesdits moyens comprennent un mano-contact hydraulique (36) associé à un contact électrique (37) maintenu ouvert par la pression hydraulique quand le moteur tourne et rappelé élastiquement en position de fermeture lorsque le moteur est coupé, un relais (38) placé en série avec le contact précité (37) et qui est excité par la fermeture dudit contact, et dont l'excitation place un second contact (39) dans une position déclenchant le passage de courant dans les connexions associées à la touche « Neutre », ce qui replace automatiquement la boîte de vitesses dans l'état « Neutre » sans que la touche « Neutre » n'ait été enfoncée.

8. Dispositif de commande selon l'une des revendications 1 à 7, caractérisé en ce que l'axe détecteur (2) est pourvu à l'une de ses extrémités d'un galet rotatif (30) en appui sur la came (4), et qui est maintenu en contact avec cette dernière par un organe élastique (33) agissant sur l'axe (2) et prenant lui-même appui sur un boîtier (5) contenant ledit axe détecteur (2).

9. Dispositif de commande selon l'une des revendications 5 à 8, caractérisé en ce que le vérin pneumatique (25) est équipé de moyens amortisseurs (34).

**Claims**

1. Device for controlling an automatic gearbox in an automotive vehicle, comprising means for causing pivotal displacement of the shaft (1) of a speed selector in order to bring it to different positions corresponding to a selected speed range, characterized in that it comprises : a shaft (2) for detecting the positions assigned to the selecting shaft (1) which is displaceable in translational motion by means of an electropneumatic system comprising a control keyboard (3) placed on the dashboard of the vehicle, and a rotary cam (4) which is rigidly fixed to the selecting shaft (1) and cooperates on the one hand with the position-detecting shaft (2) and on the other hand with the electropneumatic control system aforesaid so that depression of a key on the control keyboard (3) corresponds to an order of the electropneumatic system which places the detecting shaft (2) as well as the associated cam (4) and the selecting shaft (1) in a position which determines the selected speed range.

2. Control device in accordance with claim 1, characterized in that the detecting shaft (1) is provided with a series of profiled ramps (7a, 7b ... 11b) associated with an equal number of electric switches (X, Yr, Zr, Nr, Ya, Za, Na, R) which are connected on the one hand to the keys of the keyboard (3) and on the other hand to a pneumatic circuit (16) for controlling the rotary cam (4) and the selecting shaft (1) and that one position of the cam (4) and of the selecting shaft (1) corresponds to each predetermined position of the detecting shaft (2) and of its ramps (7a ... 11b) with respect to the entire series of electric switches.

3. Control device in accordance with claim 2, characterized in that the ramps (7a ... 11b) of the detecting shaft (2) are constituted by frusto-conical surfaces which are coaxial with said shaft and grouped together in pairs with alternate slopes, each switch (X ... R) associated with one ramp (7a ... 11b) being resiliently applied against this latter when it is closed and resiliently applied against a shouldered portion of the shaft (2) which is external to the ramp when it is open.

4. Control device in accordance with claim 3, characterized in that there correspond to each speed range associated with one key of the keyboard (3), one position of the detecting shaft (2) as well as two switches (Ya, Yr ; Za, Zr ; Na, Nr) and two ramps (7a ... 11b) except for the end positions associated with bottom gear and reverse gear ; one of the switches (Ya, Za, Na) of each pair controls said detecting shaft (2) in one direction via the pneumatic circuit (16) whilst the second switch (Yr, Zr, Nr) controls the detecting shaft (2) in the other direction.

5. Control device in accordance with any one of claims 2 to 4, characterized in that the pneumatic circuit (16) comprises electrovalves (23, 24) connected on the one hand to the keyboard (3) and on the other hand to a double-acting pneumatic jack (25) for driving the cam (4) in rotation by means of a lever (29) rigidly fixed to said cam ; the electrovalves (23, 24) drive the piston (26) of the jack (25) in one direction or in the other as a function of the orders transmitted by the switches (X, Ya, Yr ... Nr), these orders being in turn related to the positions of the switches on the corresponding ramps (7b, 7a ... 11b).

6. Control device in accordance with any one of claims 1 to 5, in which the keyboard (3) comprises a series of keys (1, 2, 3, N, R) corresponding to the different speed ranges including one « neutral » key N, characterized in that it is provided with means for automatically restoring the gearbox to its « neutral » position corresponding to depression of the « neutral » key if the driver switches-off the engine without depressing the « neutral » key.

7. Control device in accordance with claim 6, characterized in that said means comprise a hydraulic pressure switch (36) associated with an electric switch (37) which is held open by means of the hydraulic pressure when the engine rotates and which is restored elastically to the closed position when the engine is switched-off, a relay (38) which is placed in series with the switch (37) aforesaid and which is excited as a result of closing of said switch, and the excitation of which places a second switch (39) in a position which initiates the flow of current through the connections associated with the « neutral » key, thus automatically restoring the gearbox to the « neutral » state without any depression of the « neutral » key.

8. Control device in accordance with any one of claims 1 to 7, characterized in that the detecting shaft (2) is provided at one end with a roller (30) applied against the cam (4) and maintained in contact with this latter by a resilient member (33) which produces action on the shaft (2) and in turn bears on a casing (5) containing said detecting shaft (2).

9. Control device in accordance with any one of claims 5 to 8, characterized in that the pneumatic jack (25) is equipped with shock-absorbing means (34).

**Ansprüche**

1. Steuervorrichtung für das selbsttätig geschaltete Wechselgetriebe eines Kraftfahrzeuges, mit Einrichtungen zur Drehung einer Achse (1) eines Geschwindigkeitswählers, um diese in verschiedene einem gewählten Geschwindigkeitsbereich entsprechende Stellungen zu bringen, dadurch gekennzeichnet, daß sie umfaßt: eine Anzeigeachse (2) für die der Wählachse (1) zugeordneten Stellungen, die mit Hilfe eines elektropneumatischen Systems mit einer auf dem Instrumentenbrett des Fahrzeugs angeordneten Steuertastatur (3) verschiebbar ist, weiters eine Drehnocke (4), die mit der Wählachse (1) fest verbunden ist und einerseits mit der Achse (2) zur Anzeige der Stellungen und andererseits mit dem genannten elektropneumatischen Steuersystem so zusammenwirkt, daß dem Druck einer Taste der Steuertastatur (3) ein Befehl des elektropneumatischen Systems entspricht, der die Anzeigeachse (2) sowie die zugeordnete Nocke (4) und die Wählachse (1) in eine Stellung bringt, die dem gewählten Geschwindigkeitsbereich entspricht.

2. Steuervorrichtung nach Anspruch 1, dadurch gekennzeichnet, daß die Anzeigeachse (1) mit einer Mehrzahl von profilierten Schrägflächen (7a, 7b... 11b) versehen ist, die einer gleichen Anzahl von elektrischen Schaltern (X, Yr, Zr, Nr, Ya, Za, Na, R) zugeordnet sind, die einerseits mit den Tasten der Tastatur (3) und andererseits mit einem pneumatischen Steuerkreis (16) der Drehnocke (4) und der Wählachse (1) verbunden sind, und daß jeder vorbestimmten Stellung der Anzeigeachse (2) und ihrer Schrägflächen (7a... 11b) in bezug auf die Gesamtheit der elektrischen Schalter eine Stellung der Nocke (4) und der Wählachse (1) entspricht.

3. Steuervorrichtung nach Anspruch 2, dadurch gekennzeichnet, daß die Schrägflächen (7a... 11b) der Abtastachse (2) kegelstumpfartige, zur genannten Achse koaxiale Flächen sind, die mit wechselnden Neigungen paarweise angeordnet sind, wobei jeder einer Schrägfläche (7a... 11b) zugeordnete Schalter (X... R) federnd auf dieser aufliegt, wenn er geschlossen ist, und federnd auf einer außerhalb der Schrägfläche befindlichen Schulter der Achse (2) aufliegt, wenn er offen ist.

4. Steuervorrichtung nach Anspruch 3, dadurch gekennzeichnet, daß jedem einer Taste der Tastatur (3) zugeordneten Geschwindigkeitsbereich eine Stellung der Abtastachse (2) sowie zwei Schalter (Ya, Yr; Za, Zr; Na, Nr) und zwei Schrägflächen (7a... 11b) entspricht, mit Ausnahme der dem ersten Gang und dem Rückwärtsgang zugeordneten Endstellungen, wobei einer der Schalter (Ya, Za, Na) jedes Paares die genannte Anzeigeachse (2) mit Hilfe des pneumatischen Kreises (16) in eine Richtung steuert, während der zweite Schalter (Yr, Zr, Nr) die Anzeigeachse (2) in die andere Richtung steuert.

5. Steuervorrichtung nach einem der Ansprüche 2 bis 4, dadurch gekennzeichnet, daß der pneumatische Kreis (16) Elektroventile (23, 24) aufweist, die einerseits mit der Tastatur (3) und anderseits mit einem doppelt wirkenden pneumatischen Steuerzylinder (25) der Drehnocke (4) mittels eines mit dieser fest verbundenen Hebels (29) verbunden ist, wobei die Elektroventile (23, 24) den Kolben (26) des Zylinders (25) abhängig von den von den Schaltern (X, Ya, Yr... Nr.) übertragenen Befehlen in die eine oder andere Richtung steuern, wobei diese Befehle selbst mit den Stellungen der Schalter auf den entsprechenden Schrägflächen (7b, 7a... 11b) verbunden sind.

6. Steuervorrichtung nach einem der Ansprüche 1 bis 5, in der die Tastatur (3) eine Reihe von Drucktasten (1, 2, 3, N, R) aufweist, die den verschiedenen Geschwindigkeits-bereichen entsprechen und die Taste N « Neutral » bedeutet, dadurch gekennzeichnet, daß sie Einrichtungen zur automatischen Rückstellung des Getriebes in seine « Neutralstellung » aufweist, die dem Drücken der Taste « Neutral » entspricht, wenn der Fahrer den Motor ohne Drücken der Taste « Neutral » abstellt.

7. Steuervorrichtung nach Anspruch 6, dadurch gekennzeichnet, daß die genannten Einrichtungen einen einem elektrischen Kontakt (37) zugeordneten hydraulischen Druckkontakt (36) aufweisen, der bei laufendem Motor durch den hydraulischen Druck offen bleibt, und bei Abstellen des Motors federnd in Schließstellung rückgestellt wird, und daß sie weiters ein Relais (38) aufweist, das mit dem genannten Kontakt (37) in Serie geschaltet ist und durch Schließung des genannten Kontaktes erregt wird, und daß dessen Erregung einen zweiten Kontakt (39) in eine Stellung bringt, die den Stromdurchgang in den der Taste « Neutral » zugeordneten Anschlüssen freigibt, wobei das Getriebe ohne Betätigung der Taste « Neutral » automatisch in die Stellung « Neutral » gebracht wird.

8. Steuervorrichtung nach einem der Ansprüche 1 bis 7, dadurch gekennzeichnet, daß die Anzeigeachse (2) an einem Ende mit einer Drehrolle (30) versehen ist, die auf der Nocke (4) aufliegt und mit dieser mit Hilfe eines elastischen Teiles (33) in Berührung steht, der auf die Achse (2) einwirkt und seinerseits auf einem die genannte Anzeigeachse (2) aufnehmenden Gehäuse (5) aufliegt.

9. Steuervorrichtung nach einem der Ansprüche 5 bis 8, dadurch gekennzeichnet, daß der pneumatische Zylinder (25) mit Stoßdämpfereinrichtungen (34) versehen ist.

Fig:1
Fig:2
II
II

Fig: 3
X
Ya
Yr
Za
Zr
Na
Nr
R
1
2
3
N
B3
B1
B6
B4
B5
a
b
G
F

Fig: 4
12a
Ya
Fig: 6
6A
G
21
13b
Yr = 1
2
12a
7a
7b
21
Ya=0
6B
Yr = 0
2
Ya=0
6C
Yr = 0
F
2
Ya = 1
6B
Yr = 0
2
Ya=0

Fig: 5

| | X | Ya | Yr | Za | Zr | Na | Nr | R |
|---|---|---|---|---|---|---|---|---|
| 1 | 0 | 1 | 0 | 1 | 0 | 1 | 0 | 1 |
| 2 | 1 | 0 | 0 | 1 | 0 | 1 | 0 | 1 |
| 3 | 1 | 0 | 1 | 0 | 0 | 1 | 0 | 1 |
| N | 1 | 0 | 1 | 0 | 1 | 0 | 0 | 1 |
| R | 1 | 0 | 1 | 0 | 1 | 0 | 1 | 0 |
| N | 1 | 0 | 1 | 0 | 1 | 0 | 0 | 1 |
| 3 | 1 | 0 | 1 | 0 | 0 | 1 | 0 | 1 |
| 2 | 1 | 0 | 0 | 1 | 0 | 1 | 0 | 1 |
| 1 | 0 | 1 | 0 | 1 | 0 | 1 | 0 | 1 |